# EUROPEAN PATENT SPECIFICATION

(11) **EP 4 423 032 B1**
(45) Date of publication and mention of the grant of the patent: **25.11.2026**
(21) Application number: 22812497.0
(22) Date of filing: 26.10.2022
(51) Int. Cl.: C04B 26/26, C08L 95/00, C09D 195/00, E01C 7/18, E01C 7/35, E01C 11/00

(54) **MULTIFUNCTIONAL THIN BITUMINOUS LAYER WITH HIGH MECHANICAL PERFORMANCE**
MULTIFUNKTIONELLE DÜNNE BITUMINÖSE SCHICHT MIT HOHER MECHANISCHER LEISTUNG
COUCHE BITUMINEUSE MINCE MULTIFONCTIONNELLE AVEC D'EXCELLENTES PERFORMANCES MÉCANIQUES

(30) Priority: 29.10.2021 IT 202100027737
(43) Date of publication of application: 04.09.2024
(73) Proprietor: ITERCHIMICA S.p.A., 24040 Suisio (BG) (IT)
(72) Inventor: GIANNATTASIO, Federica, 24040 Suisio (BG) (IT); CONI, Mauro, 09129 Cagliari (IT)
(74) Representative: Botti & Ferrari S.p.A.
(86) International application number: PCT/EP2022/079903
(87) International publication number: WO 2023/073001

(56) References cited:
- EP-A1- 3 707 203
- CN-A- 108 129 857
- CN-A- 109 504 301
- CN-A- 110 272 230
- US-A1- 2016 326 055

## Description

### Field of application

The present invention refers to the field of the industry of road, airport, port, and railway pavements, including their relative infrastructures and structures.

In particular, the invention refers to the production of a multifunctional thin bituminous layer containing plastic material and/or a mixture of plastic materials and graphene, which is used in a surface or interlayer treatment for making and maintenance of bituminous pavements, even more in particular road, airport, port, and railway bituminous pavements, including their infrastructures and structures.

### Prior art

Bituminous membranes are known in the art and may be laid onto architectural or infrastructural elements, such as road surfaces, for example in order to improve their water-proofing properties.

An example of bituminous membrane is disclosed in the Chinese patent application CN108129857 A.

Bituminous thin surface ("BTS") treatments are known protection interventions in the maintenance of bituminous pavements, namely pavements based on bituminous conglomerate, and consist of inert materials which are variously selected, bound by bitumen, laid and rolled at temperatures of about 150°C.

In particular, in BTS, a layer or membrane of bituminous emulsion is laid to cover the old wearing course.

The thin layer of BTS can restore several surface deteriorations of limited seriousness, thereby providing a durable and friction-resistant surface on the existing pavement.

They are used because of their ability of sealing and modeling again the road pavement, eliminating surface defects (such as crumbling, deformations due to the rutting phenomenon, reduced adhesion). The reduced thickness allows to prevent milling of the wearing course, without making substantial unbalances to the superficial regulation of the platform water, just by refilling the existing surfaces, thereby extending their useful life, preserving their structural characteristics and improving their functional performance.

Therefore, the bituminous thin surface treatments allow to obtain a considerable economic saving, prolonging the useful life of road pavement.

However, the use of bituminous thin surface treatments is usually not recommended in the case of road pavements with a significant level of wear and deterioration and, often, the known technologies described above do not give the pavement the desired mechanical properties.

Also known are SAMI ("Stress-Absorbing Membrane Interlayer"), adhesive bituminous materials that function as a flexible waterproofing membrane laid inside the pavement, namely under the bituminous layers above them.

Therefore, SAMIs may be applied in road pavements ex-novo or, more commonly, on the occasion of interventions of maintenance of existing pavements, but, in any case, generally under the wearing course.

SAMIs prevent cracks and defects of the underlying old layers from propagating upwards, thereby redistributing stresses and deformations deriving from vehicular traffic downwards.

SAMIs are obtained from the combination of a bituminous emulsion modified with elastomeric polymers, such as styrene-butadiene-styrene (SBS) or styrene-butadiene rubber (SBR), and crushed aggregates with suitable morphological and mechanical characteristics.

At the state of the art, a known example of SAMI layer is Fibermat^{™}, which represents a combination of layers based on a bituminous emulsion modified with elastomeric polymers, such as styrene-butadiene-styrene (SBS) or styrene-butadiene rubber (SBR), glass fiber and aggregates, respectively. In particular, a layer made of glass fiber is placed between two layers of bituminous emulsion, thereby ensuring a complete covering of the surface, a very high resistance, impermeability and higher fatigue resistance.

To avoid propagation of cracks upwards, a low stiffness of SAMI is required, but this involves undesired results.

In fact, when SAMIs are introduced in pavements that are already cracked and have to be asphalted again, membrane deformations may occur around the crack region, thereby sliding being locally dampened. Thus, SAMI gives the road package a low bending stiffness, thereby causing a greater deflection of the pavement and a greater transmission of loads to the underlying layers.

US2016/0326055 discloses a lightweight bituminous thin layer comprising a granular fraction, a binder and additional additives. In the asphalt mix, the aggregate fraction comprises components with a size below 0.063 mm, components with a size comprised between 0.063 and 2 mm and components with a size comprised between 2 mm and 31.5 mm.

In the light of the above-disclosed prior art, the problem underlying the present invention is to produce a multifunctional thin bituminous layer that is characterized by excellent mechanical performance, including a suitable stiffness to reduce stresses in the structure in which the thin layer is applied and at the same time to ensure a suitable adhesion to the surface to which the thin layer is applied, thereby promoting an increase of load-bearing capacity and the prevention of imbalance formation.

### Summary of the invention

Said problem was solved by providing a multifunctional thin bituminous layer, intended to be used as a layer with high mechanical performance in an infrastructure element, based on a bituminous mixture comprising bitumen, an additive composition, and inorganic inert materials, said additive composition comprising at least one polyolefin plastic material and graphene,
wherein the multifunctional thin bituminous layer has a thickness equal to or lower than 5 cm.

According to the present invention, the expression "multifunctional thin bituminous layer based on a bituminous mixture" means a thin bituminous layer comprising a bituminous mixture which in turn comprises bitumen, an additive composition, inorganic inert materials and, optionally, further components.

Advantageously, the multifunctional thin bituminous layer according to the invention may be effectively used as a layer with high mechanical performance in an infrastructural element, for example for building road pavements or during operations for maintenance thereof.

In particular, it is possible to achieve said high mechanical performance without using nets or grids, since the multifunctional thin bituminous layer of the present invention absolutely lacks it.

According to the present invention, the expression "infrastructural element" in which the above-mentioned multifunctional thin bituminous layer may be used means a road, a parking area, a container yard area, a bridge deck, a viaduct, an airport runway, in particular an airstrip, a taxiway, a tarmac (or apron) or an airport junction, a heliport, a tramway or railway track, for example a mixed-use tramway track, a cycle path, a road intersection, a port quay or a port handling yard.

In particular, the present multifunctional thin bituminous layer is very suitable to be used in roads, namely in the construction or in the maintenance of road pavements.

More in particular, the present multifunctional thin bituminous layer is particularly suitable to be used in the construction or in the maintenance of road pavements and tramway or railway track, specifically on a layer of stabilized mixture of particles of different sizes, of cemented mix, of super-compacted, of cold-recycled, of extrados and intrados of the sub-ballast (i.e., the layer underlying the roadbed or ballast), of the base course, of the binder course or of the wearing course.

Preferably, the multifunctional thin bituminous layer containing graphene according to the invention has a thickness between 0.5 cm and 2 cm, more preferably between 0.8 cm and 1.5 cm.

Advantageously, indeed, especially with reference to applications when said infrastructural element is a road, such as a urban pavement, the multifunctional thin bituminous layer allows maintenance interventions with reduced thickness, high performance and waterproofing ability, so as not to modify the plans of surface runoff and to maintain the paths of rainwater when it is conveyed to a collector drain and, subsequently, to receiving bodies and water lines.

Preferably, said at least one polyolefin plastic material may be selected from polyethylene, polypropylene or any mixture of polyethylene and polypropylene.

Even more preferably, said at least one polyolefin plastic material is a mixture of polyethylene and polypropylene comprising a quantity of polyethylene between 25% and 75% by weight based on the total weight of the mixture.

In an equally preferred manner, said at least one polyolefin plastic material is a mixture of polyethylene and polypropylene comprising a quantity of polypropylene between 25% and 75% by weight based on the total weight of the mixture.

Preferably, said at least one polyolefin plastic material is recycled material.

Alternatively, said at least one polyolefin plastic material used in the additive composition according to the present invention is virgin material or a mixture of recycled material and virgin material.

Said additive composition comprises at least one polyolefin plastic material and graphene.

According to the present invention, the term "graphene" means essentially a carbon material with two-dimensional structure of carbon monoatomic layers with hexagonal matrix, wherein each carbon atom is bound to other three carbon atoms by a covalent bond and bound to the atoms of the adjacent layers by Van Der Waals forces.

Preferably, the graphene comprised in the above-mentioned additive composition may be selected from graphene nanoplatelets (GNP), graphene nanotubes, graphene nanoparticles, graphene films, graphene aerogels, graphene sheets, graphene oxide (GO) and functionalized graphene.

More preferably, the graphene comprised in the above-mentioned additive composition is graphene nanoplatelets (GNP).

In particular, the graphene comprised in the above-mentioned additive composition is graphene substantially devoid of any of its functionalized derivative, for example it is substantially devoid of graphene oxide, i.e. graphene partially functionalized with oxygen-containing groups; in any case, the graphene used in the context of the present invention may comprise traces of functionalized derivatives of graphene, i.e. equal to or less than 1%, optionally equal to or less than 0.5%, by weight of its total weight.

More in particular, from a morphological point of view and specifically in the case of graphene nanoplatelets, the graphene comprised in the above-mentioned additive composition has a median diameter of the particles or medium value of the particle size distribution between 0.5 µm and 10 µm, more specifically between 1 µm and 8 µm, calculated by analyzing the particles sizes with laser diffraction according to the methodology ISO 13320-2020.

Specifically, the graphene used in the above-mentioned additive composition may have an apparent density between 2 g/dm³ and 100 g/dm³, more specifically between 10 g/dm³ and 70 g/dm³; at the same time, graphene used in said additive composition may have a superficial area between 10 m²/g and 300 m²/g.

Said superficial area is measured by means of a BET method by absorption of inert gas (nitrogen), in particular according to the procedure ISO 9277:2010.

According to a preferred embodiment, the graphene used in the multifunctional thin bituminous layer according to the present invention is recycled graphene.

Alternatively, the graphene used in the multifunctional thin bituminous layer according to the present invention is virgin graphene or a mixture of recycled graphene and virgin graphene.

Preferably, the above-mentioned additive composition may comprise an additional component selected from polyvinyl butyral (PVB), an acrylate compound, lignin, a sulphur compound, an inorganic salt or any combination thereof.

More preferably, said additional component is polyvinyl butyral (PVB).

Alternatively, said additional component is an acrylate compound, even more preferably, said acrylate compound is selected from polyethylacrylate (PEA), polymethylacrylate (PMA), polybutylacrylate (PBA) or any combination thereof.

According to a further alternative, said additional component is lignin.

Preferably, said additive composition further comprises a plasticizer and/or an adhesion enhancer or a combination thereof.

More preferably, the adhesion enhancer may be selected from cationic, anionic or amphoteric surfactants and/or silane compounds.

Even more preferably, said cationic surfactants may be selected from amine-, amide- and/or imine-based polymer compounds or polyphosphoric-based esters, such as, for example, phosphoric esters.

More preferably, the plasticizer may be selected from compounds derived from extracts of cashew nut shells, a dimeric acid, a compound derived from a dimeric acid, any combination between a dimeric acid and a derivative of dimeric acid, amine compounds, polyphosphoric compounds and/or silane compounds.

Preferably, the graphene included in the above-mentioned additive composition may be contained in a quantity between 0.005% and 1%, more preferably between 0.005% and 0.15%, even more preferably between 0.01% and 0.1%, by weight based on the total weight of the additive composition.

In equally preferred manner, the above-mentioned polyolefin plastic material comprised in the additive composition may be contained in a quantity between 45% and 99.995%, more preferably between 50% and 99.995%, by weight based on the total weight of the additive composition.

Preferably, said additive composition has a melt flow index (MFI), calculated according to the methodology ISO 1133 at a temperature of 190°C with a load of 2.16 Kg, between 0.5 g/ 10 min and 5 g/ 10 min, more preferably between 1 g/ 10 min and 3 g/ 10 min and even more preferably between 1.5 g/ 10 min and 2.5 g/ 10 min.

In particular, due to the specific melt flow index which characterizes the additive composition, the latter is found to be capable of being effectively dispersed in the additional ingredients necessary for the formulation of the above-mentioned bituminous mixture, including bitumen and inorganic inert materials, resulting in an advantage in terms of convenience of production of the multifunctional thin bituminous layer based on the bituminous mixture itself and of its use, in particular allowing a favorable homogeneity and distribution of the additive composition in the bituminous mixture and allowing the multifunctional thin bituminous layer of the present invention to homogeneously give the infrastructural element in which it is applied improved mechanical characteristics.

Preferably, said additive composition is comprised in the above-mentioned bituminous mixture in a quantity between 0.05% and 15%, preferably between 4% and 8%, by weight based on the total weight of bitumen.

In the above-mentioned bituminous mixture, the inorganic inert materials comprise aggregates, optionally in combination with at least one filler.

In particular, in the above-mentioned bituminous mixture the aggregates comprise fine aggregates, said fine aggregates having a particle size lower than or equal to 2 mm and higher than 0.063 mm, as measured according to UNI EN 12697-2 standard method.

In the above-mentioned bituminous mixture the aggregates further comprise coarse aggregates, said coarse aggregates having a particle size lower than or equal to 8 mm and higher than 2 mm, as measured according to UNI EN 12697-2.

According to the present invention, with the term "filler" it is intended an inorganic inert material having a particle size lower than or equal to 0.063 mm, as measured according to UNI EN 12697-2 standard method.

Preferably, in said bituminous mixture said inorganic inert materials comprise coarse aggregates, wherein said coarse aggregates are present in the bituminous mixture in a quantity between 5% and 90%, more preferably between 5% and 30%, by weight based on the total weight of the bituminous mixture, fine aggregates, wherein said fine aggregates are present in the bituminous mixture in a quantity between 5% and 95%, more preferably between 10% and 85%, by weight based on the total weight of the bituminous mixture, and at least one filler, wherein said at least one filler is present in the bituminous mixture in a quantity between 0% and 20%, more preferably between 1% and 15%, even more preferably between 5% and 12%, by weight based on the total weight of the bituminous mixture.

Specifically, in the above-mentioned bituminous mixture said inorganic inert materials have a particle size distribution wherein 100% of the particles have a particle size lower than or equal to 8 mm, as measured according to UNI EN 12697-2 standard method.

Preferably, in the above-mentioned bituminous mixture said inorganic inert materials have a particle size distribution wherein between 10% and 30% of the particles have a particle size between 8 mm and 4 mm and between 70% and 90% of the particles have a particle size lower than or equal to 4 mm, as measured according to UNI EN 12697-2 standard method.

More preferably, in the above-mentioned bituminous mixture said inorganic inert materials have a particle size distribution wherein between 10% and 30% of the particles have a particle size between 8 mm and 4 mm, between 10% and 20% of the particles have a particle size between 4 mm and 2 mm and between 50% and 80% of the particles have a particle size lower than or equal to 2 mm, as measured according to UNI EN 12697-2 standard method.

Even more preferably, in the above-mentioned bituminous mixture said inorganic inert materials have a particle size distribution wherein between 10% and 30% of the particles have a particle size between 8 mm and 4 mm, between 10% and 20% of the particles have a particle size between 4 mm and 2 mm, between 45% and 65% of the particles have a particle size between 2 mm and 0.063 mm, and between 5% and 12% of the particles have a particle size lower than or equal to 0,25 mm, as measured according to UNI EN 12697-2 standard method, as measured according to UNI EN 12697-2 standard method.

Optionally, the aggregates may be crushed stone materials, natural stone aggregates, recycled aggregates (mixed granular materials recovered from scrap waste or secondary raw materials, namely "SRM"), End Of Waste ("EOW") aggregates, granulates of bituminous conglomerate, in particular reclaimed asphalt pavements ("RAP"), steel mill scrap, expanded clay, granular and crushed slags, artificial aggregates produces, for example, by high-temperature melting of certain minerals or rocks (for example bauxite or certain clays), sands and/or crushed sands.

The expression "recycled aggregates" means recovered aggregates intended to be reused for making embankments, road subgrades, draining and anti-freezing layers, yards, environmental reclamation, etc. In particular, mix granular materials recovered from scrap waste or secondary raw materials is classified as an aggregate with sizes of d/D = 0/ 125, obtained from the recovery by sorting and crushing of scraps of mainly tiling materials of construction; said aggregate has CE marking UNI EN 13242.

"End of Waste" identifies "a waste that is not a waste anymore", i.e. a waste that underwent a recycling operation, in particular a process that concretely allows a waste to play again a useful role as a product.

In particular, the fine aggregates may be crushed sands.

Optionally, the above-mentioned filler is selected from a fraction of fine aggregates, rock powder, in particular calcareous rock, concrete, hydrated lime, hydraulic lime, asphalt powder, fly ash or any combination thereof.

Preferably, the bituminous mixture of the multifunctional thin bituminous layer according to the present invention may comprise an additional additive, wherein said additional additive may be selected from an anti-icing additive, an additive with sound-absorbing properties, a coloring agent (pigment), a photocatalytic agent, a photoluminescent agent or any combination thereof.

Preferably, said additive with sound-absorbing properties is tire powder deriving from "end-of-life" (EOL) tires.

In accordance with the present invention, the term "bitumen" generally means a material comprising a solid dispersing phase at room temperature, having a thermoplastic behavior, said dispersing phase includes high-molecular-weight organic compounds, mainly hydrocarbons with a number of carbon atoms higher than 25. In said dispersing phase can generally be dispersed traces of sulfur, nitrogen, oxygen, and metal such as nickel, iron and vanadium. In particular, bitumen may be bitumen as such (namely without elastomeric additives) or modified bitumen, i.e. bitumen may comprise, besides said dispersing phase, a polymeric modifying additive, for example an elastomeric additive, such as elastomeric rubber, wherein said elastomeric rubber may be styrene-butadiene rubber, styrene-butadiene-styrene rubber, styrene-isoprene-styrene rubber, styrene-ethylene/butadiene-styrene rubber or any mixture thereof.

Preferably, the bitumen comprised in the bituminous mixture of the multifunctional thin bituminous layer according to the present invention may be selected from bitumen as such with penetration according to the method according to the UNI EN Standard 1426-2015 equal to 70/ 100, equal to 50/70, equal to 35/50 or any combination thereof.

Preferably, the above-mentioned bituminous mixture comprises a bitumen quantity between 3% and 10% by weight based on the total weight of the bituminous mixture, more preferably between 6.5% and 8.5% by weight based on the total weight of the bituminous mixture.

All the percentages indicated in the text of the present application are to be understood as weight/weight percentages, unless otherwise specified.

Advantageously, as it will be appreciated below with reference to the detailed description, the multifunctional thin bituminous layer according to the present invention is particularly suitable for being used as a layer with high mechanical performance in an infrastructural element and has excellent mechanical performance, including a suitable stiffness to reduce stresses in the infrastructural element in which the thin layer is applied and at the same time to ensure a suitable adhesion to the surface to which the thin layer is applied, thereby promoting an increase of load-bearing capacity and the prevention of imbalance formation.

Consistently, a road pavement comprising the multifunctional thin bituminous layer according to the present invention has further a poor tendency to the onset of the rutting phenomenon, and the high mechanical properties that the multifunctional thin bituminous layer gives said road pavement cause a considerable increase of the useful life of the road pavement, as well as of the safety thereof, compared to a traditional road pavement.

In other words, the present multifunctional thin bituminous layer can be efficiently used as a SAMI or as a surface thin layer (BTS).

Advantageously, the multifunctional thin bituminous layer of the invention constitutes an effective barrier against the propagation of cracks coming from the lower layers (bottom-up cracks) or from the upper layers (top-down cracks) of the pavements; moreover, it has great resistance to tangential strains and to permanent vertical deformations caused by static and dynamic loads and redistributes the stresses in the whole pavement, that is, it counteracts the phenomenon of formation of waviness from rutting in the pavement.

Said multifunctional thin bituminous layer may be used as a layer having the following functions: anti-icing, waterproofing the underlying layers, anti-rising or anti-descending of the defects for both the new pavements and the pavements in maintenance, sound-absorbing and as a layer for dynamic dampening the vibrations and of the peaks of strain stresses.

In an advantageous way, the multifunctional thin bituminous layer may be used to hold off the interventions of ordinary and extraordinary maintenance, to repair mistakes occurring when the pavement is laid, to protect the decks and the pavement from the deteriorations of the underlying layers.

In a totally advantageous manner, said multifunctional thin bituminous layer, when used in combination with EOL-based additives, promotes the reduction of noise propagation (sound-absorbing) and has a function of damping vibrations.

Advantageous is also the ability of the multifunctional thin bituminous layer of damping the peaks of strain stresses both in general terms, in any type of pavements, and in particular situations, such as joints between the different structural elements with differential stiffness, such as for example the interface between rigid and bituminous pavements, at abutments of bridges and viaducts, between pavements and railway superstructure, between pavements and urban underground services.

At the same time, advantageously, it may be used, combined with coloring agents, as a multifunctional surface thin layer with specific characteristics of appearance and, depending on the color shade used, of reduction of urban heat islands.

Moreover, the present multifunctional thin bituminous layer is very effective as a waterproofing layer.

The multifunctional thin bituminous layer of the invention has also a low heat susceptibility, and therefore allows longer lasting applications when high operation temperatures are expected.

The present invention further refers to the use of the multifunctional thin bituminous layer as a layer with high mechanical performance in an infrastructural element, preferably in road surface treatments or as an intermediate layer placed inside road pavements.

The present invention also refers to an infrastructural element comprising the above-mentioned multifunctional thin bituminous layer.

Preferably, said infrastructural element is a road, a parking area, a container yard area, a bridge deck, a viaduct, an airport runway, more preferably an airstrip, a taxiway, a tarmac (or apron) or an airport junction, a heliport, a tramway or railway track, for example a mixed-use tramway track, a cycle path, a road intersection, a port quay or a port handling yard.

More in particular, when said infrastructural element is a road or a tramway or railway track, in the infrastructural element comprising the above-mentioned multifunctional thin bituminous layer, the latter is placed on a layer of stabilized mixture of particles of different sizes, of cemented mix, of super-compacted, of cold-recycled, of extrados and intrados of the sub-ballast, of the base course, of the binder course or of the wearing course.

More preferably, said infrastructural element is a road.

Even more preferably, the multifunctional thin bituminous layer is laid on the surface of the road pavement and/or is an intermediate layer placed inside the road pavement.

The present invention relates to a process for producing the multifunctional thin bituminous layer according to the present invention and its application to an infrastructural element, wherein said process comprises the following steps:
- providing an additive composition comprising at least one polyolefin plastic material and graphene;
- optionally, mixing said additive composition with bitumen;
- adding to inert inorganic materials, under stirring and at a temperature between 130°C and 200°C, said additive composition and bitumen, optionally previously mixed together, obtaining a bituminous mixture;
- applying the bituminous mixture thereby obtained to an infrastructural element at a temperature between 110°C and 200°C, thereby obtaining a multifunctional thin bituminous layer, wherein said multifunctional thin bituminous layer has a thickness equal to or lower than 5 cm.

Preferably, the present process further comprises the following step:
- compacting the multifunctional thin bituminous layer thereby applied to an infrastructural element.

More preferably, the compacting step may be carried out using rolling means.

In an equally preferred manner, the compacting step may be carried out at a temperature between 110°C and 200°C.

Preferably, following the compacting step, the multifunctional thin bituminous layer thereby obtained is allowed to cool to room temperature.

Preferably, the step of adding to inorganic inert materials an additive composition and bitumen is carried out at a temperature between 165°C and 185°C, more preferably between 170°C and 180°C.

In an equally preferred manner, in the step of applying the bituminous mixture to an infrastructural element the bituminous mixture has a temperature between 130°C and 200°C, more preferably between 150°C and 180°C.

Preferably, the process according to the present invention comprises the following preliminary steps:
- optionally drying the inorganic inert materials, more preferably until reaching a moisture equal to about 0.20% by weight based on their total weight;
- bring the inorganic inert materials to a temperature between 130°C and 200°C, more preferably between 165°C and 185°C, even more preferably between 170°C and 180°C.

Preferably, said infrastructural element is a road, a parking area, a container yard area, a bridge deck, a viaduct, an airport runway, more preferably an airstrip, a taxiway, a tarmac (or apron) or an airport junction, a heliport, a tramway or railway track, for example a mixed-use tramway track, a cycle path, a road intersection, a port quay or a port handling yard.

More in particular, when said infrastructural element is a road or a tramway or railway track, in the infrastructural element comprising the above-mentioned multifunctional thin bituminous layer, the latter is placed on a layer of stabilized mixture of particles of different sizes, of cemented mix, of super-compacted, of cold-recycled, of extrados and intrados of the sub-ballast, of the base course, of the binder course or of the wearing course.

Preferably, in the step of applying the bituminous mixture to an infrastructural element, said multifunctional thin bituminous layer has a thickness between 0.5 cm and 2 cm, more preferably between 0.8 cm and 1.5 cm.

Preferably, in the above-mentioned process the inorganic inert materials are previously dried.

The characteristics and the advantages of the present invention will become clearer from some embodiments thereof, which are set forth hereinafter by way of non-limiting illustration.

### Brief description of the drawings

Figure 1 shows a table with parameters of characterization of the bitumen used in the bituminous mixture according to an embodiment of the present invention.
Figure 2a shows two tables with parameters of characterization of the aggregates, coarse and fine, used in the bituminous mixture according to an embodiment of the present invention.
Figure 2b shows a table with parameters of characterization of the filler used in the bituminous mixture according to an embodiment of the present invention.
Figure 3 shows the calculated particle size distribution of the inorganic inert materials used according to an embodiment of the present invention.
Figure 4 shows two illustrations showing the structure of a road pavement not according to the invention (solution A) and of a road pavement according to the invention (solution B), the latter comprising the multifunctional thin bituminous layer according to the invention applied as an interlay (such as SAMI).
Figure 5 shows a table with the values resulting from Falling Weight Deflectometer (FWD) survey in special configuration at the transition between the road pavement with and without the multifunctional thin bituminous layer.

### Detailed description

The present invention relates to a multifunctional thin bituminous layer containing inorganic inert materials, selected on the basis of the particle size, bound by bitumen, and an additive composition comprising at least one polyolefin, preferably a polyolefin or a mixture of recycled polyolefins having a high modulus, as well as - according to a particular embodiment of the invention exemplified below.

According to a particular embodiment of the invention exemplified below the aggregates, in particular coarse aggregates, crushed by means of a grinding process were selected on the basis of the particle size equal to or lower than 8 mm, as measured according to UNI EN 12697-2 standard method, were hot-mixed with semisolid bitumen for road use to which was added a polyolefin plastic material and graphene. The final bituminous mixture was laid on site at a temperature of about 150°C and the multifunctional thin bituminous layer thereby obtained was compacted with 10t heavy rollers made of metal.

By way of example, a preferred example of preparation of a bituminous mixture comprising bitumen, an additive composition and inorganic inert materials and the subsequent laying of said bituminous mixture on a surface, thereby obtaining a multifunctional thin bituminous layer containing graphene, is reported below.

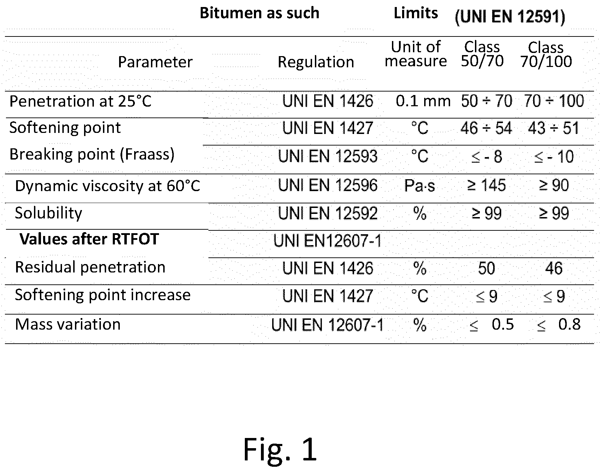

The bitumen used in some embodiments according to the present invention and comprised in said bituminous mixture, like bitumen as such with penetration according to the method according to the UNI EN Standard 1426-2015 equal to 50/70, was characterized by different parameters, such as penetration at 25°C, softening point, dynamic viscosity at 60°C and solubility; after the Rolling Thin Film Oven Test (RTFOT), which allows to reproduce the phenomenon of short-term ageing on bitumen, i.e. the ageing the binder undergoes during the steps of mixing, transportation and laying on site of the bituminous conglomerate, through the parameters residual penetration, increase of the softening point and mass variation. The values of said parameters must comply with the Appendix ZA of UNI EN standard 12591, as can be observed in the table shown in Figure 1.

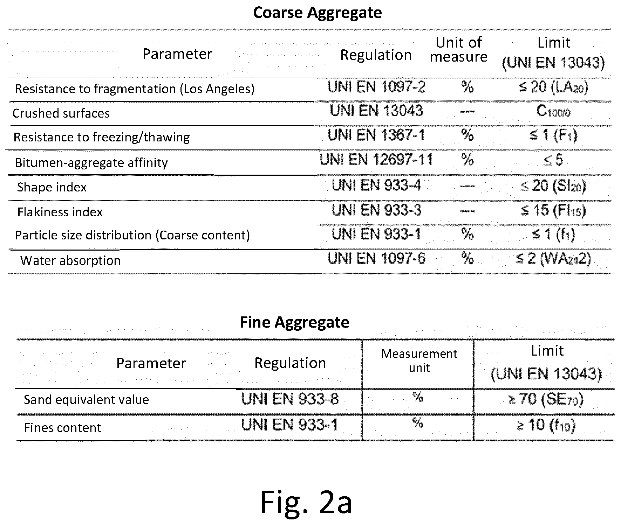

In the same way, the characteristics of the coarse and the fine aggregates were evaluated, said characteristics complying with the provisions of Appendix ZA of UNI EN Standard 13043 and being shown in the tables of Figure 2a.

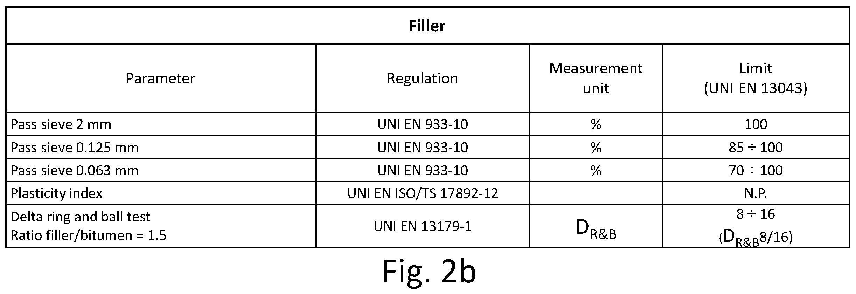

The characteristics of the filler were evaluated, as well (Figure 2b).

In particular, the multifunctional thin bituminous layer of the present invention was applied to a road surface.

Afterward, the resulting mechanical properties of the road surface thereby modified were tested.

### Preparation of a bituminous mixture for a multifunctional thin bituminous layer

First, an additive composition previously obtained as described below, according to the recipe shown in *Table* 1, was provided:

**Table 1**

| | |
|---|---|
| Mixture of polyolefins (polyethylene and polypropylene 70:30) | 74.5% |
| Polyvinyl butyral | 15% |
| Virgin graphene | 0.5% |
| Adhesion enhancer | 5% |
| Plasticizer | 5% |
| **Total** | **100%** |

The additive composition was prepared by grinding separately the mixture of polyethylene and polypropylene, the polyvinyl butyral and the graphene, and then by mixing the ground components in a mixer, together with the adhesion enhancer and the plasticizer, thereby obtaining a homogeneous mixture with particles having an average diameter of about 4 mm.

In particular, in the context of the present invention, the adhesion enhancers may be selected from cationic, anionic or amphoteric surfactants and/or silane compounds. Moreover, the surfactants may be amine-, amide- and/or imine-based polymer compounds or polyphosphoric-based esters, such as, for example, phosphoric esters.

As regards the plasticizers, in the context of the present invention, one may use compounds derived from extracts of cashew nut shells, a dimeric acid, a compound derived from a dimeric acid, any combination between a dimeric acid and a derivative of dimeric acid, amine compounds, polyphosphoric compounds and/or silane compounds.

The virgin graphene that was used had a median diameter of the particles between 1 µm and 8 µm, calculated by analyzing the particles sizes with laser diffraction according to the methodology ISO 13320-2020.

Afterward, using the additive composition thereby obtained, a bituminous mixture was prepared as described below according to the recipe shown in *Table 2:*

**Table 2**

| Materials | Parts by weight |
|---|---|
| Coarse aggregates | 14 |
| Fine aggregates | 78 |
| Filler | 8 |
| Bitumen 50/70 | 7 |
| Additive composition | 0.49 |
| Total | 107.49 |

The multifunctional thin bituminous layer of the invention was prepared by means of the following procedure:
- selecting aggregates with a particle size lower than or equal to 8 mm, as measured according to UNI EN 12697-2 standard method;
- drying the aggregates until reaching a moisture equal to about 0.20% by weight based on their total weight;
- bring the aggregates, and eventually the filler, to a temperature equal to about 180°C;
- subsequently, mixing in a mixer, at a temperature of about 175°C, the aggregates, the additive composition, the filler, the additional additives, and the bitumen, so as to obtain the above-mentioned bituminous mixture.

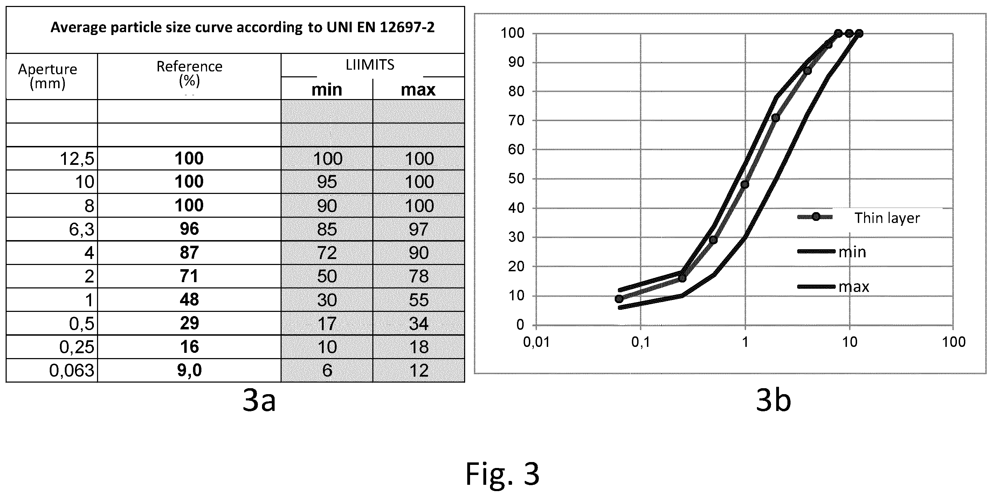

In particular, the particle size distribution of the inorganic inert materials used in the present example is showed at Figure 3, wherein Figure 3A refers to the particle size distribution of the inorganic inert materials, as measured according to UNI EN 12697-2 standard method by using sieves of the series +2, and Figure 3B is a graphic representation of the particle size distribution shown at Figure 3A.

### Application of a multifunctional thin bituminous layer to a road pavement

The bituminous mixture thereby obtained was kept at a temperature of about 175°C inside the mixer and, after transporting it to the application site using suitable transportation means, was subsequently applied on the laying surface.

The laying surface, namely an asphalt layer of a road pavement, was previously cleaned, by removing residues, in order to ensure a proper adhesion between layers.

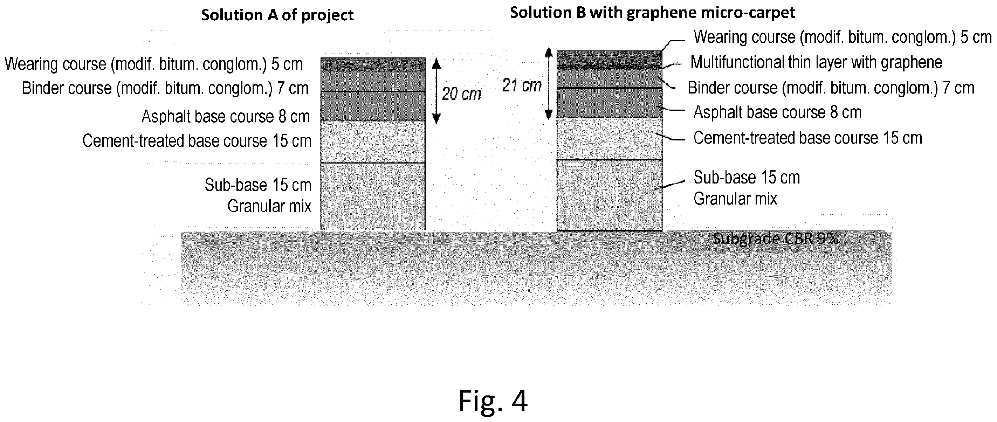

The road pavement at issue was structured as follows (starting from the deepest layer contacting the ground, up to the wearing course, as shown in Figure 4, solution B, compared to a conventional road pavement not according to the invention, solution A): sub-base of 15 cm, cement-treated base course of 15 cm, asphalt base course of 8 cm and a binder course of 7 cm, which is made of bituminous conglomerate.

The laying on site of the bituminous mixture was carried out, resulting in a finished layer that was perfectly shaped, devoid of crumbling, cracks and free of defects due to segregation of larger rock elements.

During laying, attention was paid in the formation of longitudinal joints, that were preferably obtained by well-timed juxtaposition of a strip of multifunctional thin bituminous layer to the previous one.

The temperature of the bituminous mixture during laying was maintained not lower than 150°C, in particular equal to about 170°C. Moreover, to ensure the best tamping of the mixture, rolling was carried out immediately after laying at a temperature higher than 145°C, in particular equal to about 150°C.

Compaction of the multifunctional thin bituminous layer was started directly after laying the bituminous mixture by means of compacting rollers and was completed without interruptions.

The multifunctional thin bituminous layer had a thickness of about 1 cm.

After cooling to room temperature, a draining wearing course with a thickness of about 5 cm was laid and then compacting rollers were used. The compaction thereby occurred allowed to obtain an even thickening in every point and to prevent cracks and slidings in the layer just laid, so as to obtain a surface of the layers that is free of roughness and waviness.

### Experimental examination of the mechanical and chemical-physical properties

Finally, lab tests were carried out in a test field on a road pavement containing the multifunctional thin bituminous layer of the invention.

The tests that were performed are:
- detailed (10 m pitch) Falling Weight Deflectometer (FWD) survey at the test field of the extrados of the binder before and after laying the multifunctional thin bituminous layer according to the invention, before applying the draining wearing course and applied to the road surface as previously described;
- FWD survey in special configuration at the transition between the pavement with and without the multifunctional thin bituminous layer, applied on the extrados of the binder and before the application of the draining wearing course;
- Core drilling before and after laying the multifunctional thin bituminous layer, applied on the extrados of the binder and before the application of the draining wearing course; and,
- Permeability tests before and after laying the multifunctional thin bituminous layer in situ, namely applied on the extrados of the binder and before the application of the draining wearing course, and in the laboratory.

Hereinafter, the results for each previously mentioned test are described.

### i) Falling Weight Deflectometer FWD survey on the test field

Falling Weight Deflectometer (FWD) survey was carried out on the extrados of the binder course before and after laying the multifunctional thin bituminous layer. The results show a general improvement and an excellent stiffness of the binder course following laying the multifunctional thin bituminous layer.

In particular, the measurements were taken with a 1700 KPa stimulation and an air temperature between 12.5 and 19.7°C.

The results obtained are shown in the following *Table 3.*

**Table 3**

| Moduli Mpa | | | |
|---|---|---|---|
| Layer | With multifunctional thin bituminous layer A | Without multifunctional thin bituminous layer B | % Variation |
| Binder course | 5051* | 3633* | 139% |
| Asphalt base course | 3181* | 2837* | 112% |
| Cement-treated base course | 3914 | 2331 | 168% |
| Sub-base course (granular mix) | 600 | 439 | 137% |
| Subgrade (pavement foundation) | 76 | 70 | 109% |
| **The values of the moduli of the bituminous materials are referred to the reference temperature T_{ref} 14°C* | | | |

The calculated values from Falling Weight Deflectometer (FWD) survey were measured by a falling weight deflectometer. Said instrument consists essentially of a known mass capable of generating on the subgrade an impulse-type load by falling on a set of springs mounted on a plate placed on the pavement, thereby making dynamic the induced stimulation. The system provides the use of seven accelerometer transducers (geophones), which are placed in line, capable of measuring the basin of the deflections, which are of the reversible viscous and elastic type. By a process of back analysis, it is possible to obtain the dynamic moduli of the various layers, including the subgrade, assigning different attempt values of the moduli of the layers and verifying which of these values produce the deflections that best approximate the measured ones.

The procedure used is compliant with the experimental methodology ASTM D4694 - 09(2020) (Standard Test Method for Deflections with a Falling-Weight-Type Impulse Load Device).

It is important to observe from *Table 3* that the high qualities of the multifunctional thin bituminous layer containing graphene not only allow to increase binder course stiffness, but also to better redistribute the stresses in the whole pavement, thereby improving the mechanical response of the materials of the lower layers. The gradient of stresses is maximal where there is contact between the stressed surface and the load; in other words, compared to a pavement with the multifunctional thin bituminous layer of the invention, a conventional road pavement was shown to have lower performance from the standpoint of the absorption of the applied stress, especially in its upper layers.

The multifunctional thin bituminous layer of the invention allows to rapidly spread and extinguish the strains where they are more intense. The lower layers can thereby work with lower stress ratios, showing more elastic responses and higher fatigue resistance.

### ii) FWD survey in special configuration at the transition between the pavement with and without the multifunctional thin bituminous layer

The deflectometry tests performed were carried out with a special configuration of FWD so as to highlight the structural effect of the multifunctional thin bituminous layer laid on the binder in the test field. In particular, the measurements were taken with a 1700 KPa stimulation and an air temperature between 12.5 and 19.7°C.

To measure deflection, the bar holding the geophones, i.e. the sensors capable of receiving the waves propagating in the ground, and the load plate are placed in 14 measurement stations: 7 are placed on the binder layer without the multifunctional thin bituminous layer of the invention and 7 on the multifunctional thin bituminous layer of the invention.

More in particular, the values of FWD survey calculated in special configuration were measured according to the falling weight deflectometer technique as described above.

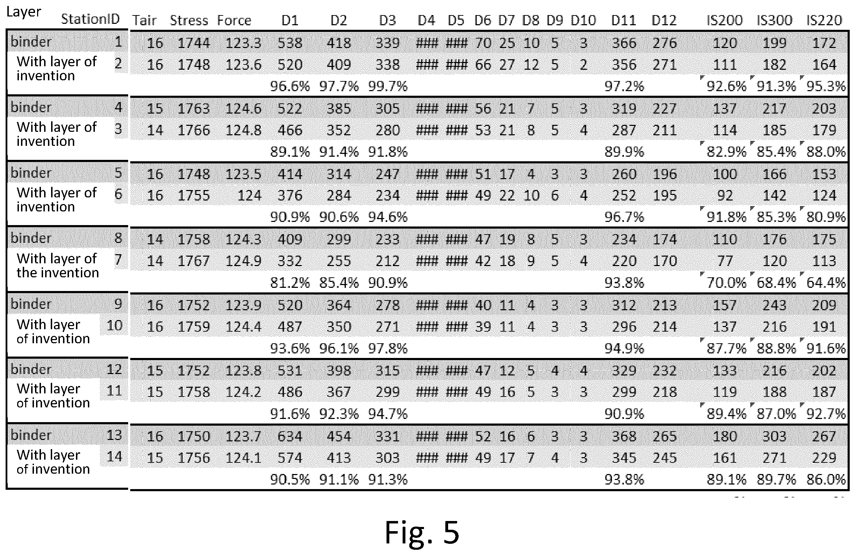

The basins of deflection with and without multifunctional thin bituminous layer of the invention were compared in 2 measurement stations and the results obtained, as shown in Figure 5, clearly highlight the positive effect of the multifunctional thin bituminous layer containing graphene, especially the ability thereof to increase the performance of the pavement, with mean reductions of the IS300 index, i.e. of the deformation of the pavement, of 14.9%.

The deflections reduce by 9.5% (Index D1 in the table shown in Figure 5).

The following moduli values were also found *(Table 4):*

**Table 4**

| Moduli Mpa | | | |
|---|---|---|---|
| Layer | With multifunctional thin bituminous layer | Without multifunctional thin bituminous layer | % Variation |
| Binder course | 4243* | 3481* | +21.89% |
| Asphalt base course | 2575* | 2262* | + 13.84% |
| Cement-treated base course | 4010 | 3179 | +26.14% |
| **The values of the moduli of the bituminous materials are referred to the reference temperature T_{ref} 14°C* | | | |

Significant increases of the material moduli are thus found, in particular equal to about 22% in the case of the binder course before and after the application of the multifunctional thin bituminous layer according to the invention.

### iii) Lab tests on core boring samples before and after laying the multifunctional thin bituminous layer

12 cores of 100 mm diameter and 160 mm length were drilled from both the road pavement before laying a multifunctional thin bituminous layer of the invention, and after laying the latter.

Indirect tensile strength (TS) test, Indirect Tensile Strength Ratio (ITSR) test and dynamic stiffness test were carried out on the cores using NAT equipment.

The results indicate a TS value of the cores without multifunctional thin bituminous layer of the invention of about 0.78 MPa and a value after laying the latter of 1.039 MPa with an increase of 33.2%. Also the ITSR index is increased by about 39%, as shown in the following *Table 5:*

**Table 5**

| Material | TS (GPa) | ITSR |
|---|---|---|
| Binder | 0.78·10⁻³ | 31.85 |
| Binder with multifunctional thin bituminous layer | 1.039·10⁻³ | 44.25 |
| Increase | +33.2% | +38.93% |

The dynamic stiffness tests gave the following values (*Table 6*):

**Table 6**

| Material | Dynamic stiffness NAT | ε_{X} |
|---|---|---|
| Binder course | 4354 MPa | 5300 µstrain |
| Binder course with multifunctional thin bituminous layer | 4791 MPa | 5300 µstrain |
| *Increase* | + 10.04% | |

As shown in the previous table, the performance increase in terms of dynamic stiffness is 10.04%.

### iv) Permeability tests before and after laying the multifunctional thin bituminous layer in situ and in the laboratory

The permeability tests showed excellent impermeabilization values. 7 tests were carried out in situ, in different positions along the road pavement analyzed, on the binder course with and without the multifunctional thin bituminous layer of the invention, applied on the extrados of the binder course and before the application of the draining wearing course with the following results, shown in *Table 7:*

**Table 7**

| Test N. | Position | Surface layer | Time | Permeability |
|---|---|---|---|---|
| 1 | Sect. 328+ 10m | Multifunctional thin bituminous layer | Longer than 600 sec | ND-impermeable |
| 2 | Sect. 327 | Multifunctional thin bituminous layer | Longer than 600 sec | ND-impermeable |
| 3 | Sect. 327+3 | Multifunctional thin bituminous layer | Longer than 600 sec | ND-impermeable |
| 4 | Sect. 325+17 | Multifunctional thin bituminous layer | Longer than 600 sec | ND-impermeable |
| 5 | Sect. 325+10 | Multifunctional thin bituminous layer | Longer than 600 sec | ND-impermeable |
| 6 | Sect. 322+10 | Binder | 53 | 4.35 dm³/min |
| 7 | Sect. 322+7 | Binder | 150 | 1.54 dm³/min |

The multifunctional thin bituminous layer of the invention may thus be used, due to its high stiffness and ability of distribution of stresses from traffic load, as a layer for being superimposed on existing or newly produced bituminous layers that are to be structurally reinforced (asphalt base course, binder course, wearing course), as a SAMI, but also as a surface thin layer (BTS). The same properties are useful to extinguish more rapidly the actions on the underlying materials (subgrades, low bearing capacity pavement foundations, cement-treated base course) and to maintain the overall behavior of the road package in the elastic field.

The high resistance shown against tangential strains and permanent vertical deformations (ruts) may be applied in areas exposed to strong horizontal motions, such as accelerations and brakings (such as acceleration lanes, deceleration lanes, ramps, stops) or stimulated by static loads (such as traffic lights, bus stops).

Moreover, the excellent fatigue resistance is recommended in bridge decks, in architectural structures in general, in joints, in roads with strong heavy traffic.

The great waterproofing ability allows to seal the surface of decks, viaducts, structures and to rebuild flaws, during the construction, of bituminous layers, which can be too porous (on asphalt base course, binder course, wearing course) or to make an excellent waterproofing layer under the draining wearing course.

Moreover, the multifunctional thin bituminous layer may be used where it is desired to postpone renovation interventions for a few years, by modifying the heights of the road surface by a few centimeters, by sealing cracks, small flaws, disjunctions, crumbling, to coat patches, to fill ruts, to limit backwater, etc. In these cases, laying the multifunctional thin bituminous layer also limits the generation of the rolling noise and absorbs part of the total acoustic energy.

It is important to observe that the high qualities of the multifunctional thin bituminous layer of the invention not only allow to increase the stiffness of the overall layer between multifunctional thin bituminous layer - binder course, but also to better redistribute the stresses in the whole pavement, thereby improving the mechanical response also of the materials of the lower layers. The multifunctional thin bituminous layer of the invention allows to rapidly spread and extinguish the strains where they are more intense. The lower layers can thereby work with lower stress ratios, showing more elastic responses and higher fatigue resistance.

In conclusion, the multifunctional thin bituminous layer of the invention combines excellent mechanical performance, high environmental performance, related to the reduced consumption of raw materials and to the increased average life of the infrastructural element to which it is applied, as well as versatility, allowing to:
- improve mechanical performance, durability and reliability of the layer to which it is applied, for example a binder course of a road pavement;
- reduce stresses on the layer to which it is applied, for example a binder course and on all the underlying layers;
- when the infrastructural element is a road pavement and the multifunctional thin bituminous layer of the invention is used as a SAMI, reduce the deformability of the binder course and of the whole road pavement; and further
- completely seal the layer to which it is applied, for example a binder course;
- when the infrastructural element is a road pavement and the multifunctional thin bituminous layer of the invention is used as a SAMI, improve the impermeability of the substructure of the draining wearing course;
- improve the acoustic insulation properties of the infrastructural element, in particular when the bituminous mixture with which the multifunctional thin bituminous layer is made comprises additives suitable for the purpose;
- improve the anti-icing properties of the infrastructural element, in particular when the bituminous mixture with which the multifunctional thin bituminous layer is made comprises additives suitable for the purpose.

Moreover, it is possible to obtain the above-mentioned advantages, causing an increase of the total thickness of the infrastructural element of maximum 5 cm, preferably an increase between 1-3 cm, corresponding to the thickness of the multifunctional thin bituminous layer according to the invention.

## Claims

1. A multifunctional thin bituminous layer, intended to be used as a layer with high mechanical performance in an infrastructure element, based on a bituminous mixture comprising bitumen, an additive composition, and inorganic inert materials, said additive composition comprising at least one polyolefin plastic material and graphene,
wherein said multifunctional thin bituminous layer has a thickness equal or lower than 5 cm,
said inorganic inert materials comprising aggregates, optionally in combination with at least one filler,
wherein said aggregates comprises fine aggregates, said fine aggregates having a particle size lower than or equal to 2 mm and higher than 0.063 mm, as measured according to UNI EN 12697-2 standard method, and
wherein said aggregates comprises coarse aggregates, said coarse aggregates having a particle size lower than or equal to 8 mm and higher than 2 mm, as measured according to UNI EN 12697-2 standard method;
said inorganic inert materials having a particle size distribution wherein 100% of the particles have a particle size lower than or equal to 8 mm, as measured according to UNI EN 12697-2 standard method.

2. The multifunctional thin bituminous layer according to claim 1, having a thickness comprised between 0.5 cm and 2 cm, preferably between 0.8 cm and 1.5 cm.

3. The multifunctional bituminous thin layer according to claim 1 or 2, wherein said polyolefin plastic material is selected from polyethylene, polypropylene or any mixture of polyethylene and polypropylene.

4. The multifunctional bituminous thin layer according to any one of the preceding claims, wherein said graphene is selected from graphene nanoplatelets, graphene nanotubes, graphene nanoparticles, graphene films, graphene aerogels, graphene sheets, graphene oxide or functionalized graphene.

5. The multifunctional bituminous thin layer according to any one of the preceding claims, wherein said additive composition comprises an additional component selected from polyvinyl butyral, an acrylate compound, lignin, a sulphur compound, an inorganic salt or any combination thereof.

6. The multifunctional bituminous thin layer according to any one of the preceding claims, wherein said additive composition further comprises a plasticizer and / or an adhesion enhancer.

7. The multifunctional bituminous thin layer according to claim 6, wherein said adhesion enhancer is selected from cationic, anionic or amphoteric surfactants and / or silane compounds.

8. The multifunctional bituminous thin layer according to any one of the preceding claims, wherein the graphene is comprised in the additive composition in a quantity between 0.005% and 1%, preferably between 0.005% and 0.15%, more preferably between 0.01% and 0.1%, by weight based on the total weight of the additive composition.

9. The multifunctional bituminous thin layer according to any one of claims 5 to 8, wherein said polyolefin plastic material is comprised in the additive composition in a quantity between 45% and 99.995%, preferably between 50% and 99.995%, by weight based on the total weight of the additive composition.

10. The multifunctional bituminous thin layer according to any one of the preceding claims, wherein said additive composition is comprised in said bituminous mixture in a quantity between 0.05% and 15%, preferably between 4% and 8%, by weight based on the total weight of bitumen.

11. The multifunctional bituminous thin layer according to claim 1, wherein in said bituminous mixture said inorganic inert materials comprise coarse aggregates, said coarse aggregates being present in said bituminous mixture in a quantity between 5% and 90%, preferably between 5% and 30%, by weight based on the total weight of the bituminous mixture, fine aggregates, said fine aggregates being present in said bituminous mixture in a quantity between 5% and 95%, preferably between 10% and 85%, by weight based on the total weight of the bituminous mixture, and at least one filler, said at least one filler being present in said bituminous mixture in a quantity between 0% and 20%, preferably between 1% and 15%, by weight based on the total weight of the bituminous mixture.

12. The multifunctional bituminous thin layer according to any one of the preceding claims, wherein said bituminous mixture comprises a bitumen quantity between 3% and 10%, preferably between 6.5% and 8.5%, by weight based on the total weight of the bituminous mixture.

13. The multifunctional bituminous thin layer according to any one of the preceding claims, wherein said bituminous mixture comprises an additional additive, said additional additive being selected from an anti-icing additive, an additive with sound-absorbing properties, a coloring agent, a photocatalytic agent, a photoluminescent agent or any combination thereof.

14. Use of the multifunctional thin bituminous layer according to any one of claims 1-13 as a layer with high mechanical performance in an infrastructural element, preferably in road surface treatments or as an intermediate layer placed inside road pavements.

15. An infrastructural element comprising the multifunctional thin bituminous layer according to any one of claims 1-13, preferably said infrastructural element being a road, a parking area, a container yard area, a bridge deck, a viaduct, an airport runway, preferably an airstrip, a taxiway, an apron or an airport junction, a heliport, a tramway or railway track, a cycle path, a road intersection, a port quay or a port handling yard.

16. A process for producing a multifunctional thin bituminous layer according to any one of claims 1-13 and its application to an infrastructural element, said process comprising the following steps:
- providing an additive composition comprising at least one polyolefin plastic material and graphene;
- optionally, mixing said additive composition with bitumen;
- adding to inert inorganic materials, under stirring and at a temperature between 130°C and 200°C, said additive composition and bitumen, optionally previously mixed together, obtaining a bituminous mixture;
- applying the bituminous mixture thereby obtained to an infrastructural element at a temperature between 110°C and 200°C, obtaining a multifunctional thin bituminous layer, wherein said multifunctional thin bituminous layer has a thickness equal to or lower than 5 cm; and,
- optionally, compacting, preferably at a temperature between 110°C and 200°C, said multifunctional thin bituminous layer thereby applied to said infrastructural element.

17. The process according to claim 16, wherein the step of adding to inorganic inert materials an additive composition and bitumen is carried out at a temperature between 165°C and 185°C, preferably between 170°C and 180°C, and/or
wherein in the step of applying the bituminous mixture to an infrastructural element said bituminous mixture has a temperature between 130°C and 200°C, preferably between 150°C and 180°C.

## Patentansprüche

1. Multifunktionelle dünne bituminöse Schicht, die dazu vorgesehen ist, als eine Schicht mit hoher mechanischer Leistung in einem Infrastrukturelement verwendet zu werden, basierend auf einem bituminösen Gemisch, das Bitumen, eine Additivzusammensetzung und anorganische inerte Materialien umfasst, wobei die Additivzusammensetzung mindestens ein Polyolefin-Kunststoffmaterial und Graphen umfasst,
wobei die multifunktionelle dünne bituminöse Schicht eine Dicke aufweist, die gleich oder kleiner als 5 cm ist,
wobei die anorganischen inerten Materialien Aggregate umfassen, gegebenenfalls in Kombination mit mindestens einem Füllstoff,
wobei die Aggregate feine Aggregate umfassen, wobei die feinen Aggregate eine Partikelgröße von weniger als oder gleich 2 mm und mehr als 0,063 mm aufweisen, wie entsprechend dem Standardverfahren UNI EN 12697-2 gemessen, und
wobei die Aggregate grobe Aggregate umfassen, wobei die groben Aggregate eine Partikelgröße von weniger als oder gleich 8 mm und mehr als 2 mm aufweisen, wie entsprechend dem Standardverfahren UNI EN 12697-2 gemessen;
wobei die anorganischen inerten Materialien eine Partikelgrößenverteilung aufweisen, wobei 100 % der Partikel eine Partikelgröße von weniger als oder gleich 8 mm aufweisen, wie entsprechend dem Standardverfahren UNI EN 12697-2 gemessen.

2. Multifunktionelle dünne bituminöse Schicht nach Anspruch 1, die eine Dicke aufweist, die im Bereich zwischen 0,5 cm und 2 cm liegt, vorzugsweise zwischen 0,8 cm und 1,5 cm.

3. Multifunktionelle bituminöse dünne Schicht nach Anspruch 1 oder 2, wobei das Polyolefin-Kunststoffmaterial aus Polyethylen, Polypropylen oder einem beliebigen Gemisch aus Polyethylen und Polypropylen ausgewählt ist.

4. Multifunktionelle bituminöse dünne Schicht nach einem der vorhergehenden Ansprüche, wobei das Graphen aus Graphen-Nanoplättchen, Graphen-Nanoröhrchen, Graphen-Nanopartikeln, Graphen-Folien, Graphen-Aerogelen, Graphen-Bahnen, Graphenoxid oder funktionalisiertem Graphen ausgewählt ist.

5. Multifunktionelle bituminöse dünne Schicht nach einem der vorhergehenden Ansprüche, wobei die Additivzusammensetzung eine zusätzliche Komponente umfasst, die aus Polyvinylbutyral, einer Acrylatverbindung, Lignin, einer Schwefelverbindung, einem anorganischen Salz oder einer beliebigen Kombination davon ausgewählt ist.

6. Multifunktionelle bituminöse dünne Schicht nach einem der vorhergehenden Ansprüche, wobei die Additivzusammensetzung ferner einen Weichmacher und/oder einen Haftungsverstärker umfasst.

7. Multifunktionelle bituminöse dünne Schicht nach Anspruch 6, wobei der Haftungsverstärker aus kationischen, anionischen oder amphoteren Tensiden und/oder Silanverbindungen ausgewählt ist.

8. Multifunktionelle bituminöse dünne Schicht nach einem der vorhergehenden Ansprüche, wobei das Graphen basierend auf dem Gesamtgewicht der Additivzusammensetzung in einer Menge zwischen 0,005 Gew.-% und 1 Gew.-%, vorzugsweise zwischen 0,005 Gew.-% und 0,15 Gew.-%, noch bevorzugter zwischen 0,01 Gew.-% und 0,1 Gew.-%, in der Additivzusammensetzung enthalten ist.

9. Multifunktionelle bituminöse dünne Schicht nach einem der Ansprüche 5 bis 8, wobei das Polyolefin-Kunststoffmaterial basierend auf dem Gesamtgewicht der Additivzusammensetzung in einer Menge zwischen 45 Gew.-% und 99,995 Gew.-%, vorzugsweise zwischen 50 Gew.-% und 99,995 Gew.-%, in der Additivzusammensetzung enthalten ist.

10. Multifunktionelle bituminöse dünne Schicht nach einem der vorhergehenden Ansprüche, wobei die Additivzusammensetzung basierend auf dem Gesamtgewicht des Bitumens in einer Menge zwischen 0,05 Gew.-% und 15 Gew.-%, vorzugsweise zwischen 4 Gew.-% und 8 Gew.-%, in dem bituminösen Gemisch vorhanden ist.

11. Multifunktionelle bituminöse dünne Schicht nach Anspruch 1, wobei die anorganischen inerten Materialien in dem bituminösen Gemisch Folgendes umfassen: grobe Aggregate, wobei die groben Aggregate basierend auf dem Gesamtgewischt des bituminösen Gemisches in einer Menge zwischen 5 Gew.-% und 90 Gew.-%, vorzugsweise zwischen 5 Gew.-% und 30 Gew.-%, in dem bituminösen Gemisch vorhanden sind, feine Aggregate, wobei die feinen Aggregate basierend auf dem Gesamtgewicht des bituminösen Gemisches in einer Menge zwischen 5 Gew.-% und 95 Gew.-%, vorzugsweise zwischen 10 Gew.-% und 85 Gew.-%, in dem bituminösen Gemisch vorhanden sind, und mindestens einen Füllstoff, wobei der mindestens eine Füllstoff basierend auf dem Gesamtgewicht des bituminösen Gemisches in einer Menge zwischen 0 Gew.-% und 20 Gew.-%, vorzugsweise zwischen 1 Gew.-% und 15 Gew.-%, in dem bituminösen Gemisch vorhanden ist.

12. Multifunktionelle bituminöse dünne Schicht nach einem der vorhergehenden Ansprüche, wobei das bituminöse Gemisch basierend auf dem Gesamtgewicht des bituminösen Gemisches eine Bitumenmenge zwischen 3 Gew.-% und 10 Gew.-%, vorzugsweise zwischen 6,5 Gew.-% und 8,5 Gew.-% umfasst.

13. Multifunktionelle bituminöse dünne Schicht nach einem der vorhergehenden Ansprüche, wobei das bituminöse Gemisch ein zusätzliches Additiv umfasst, wobei das zusätzliche Additiv aus einem Frostschutz-Additiv, einem Additiv mit schallabsorbierenden Eigenschaften, einem Farbstoff, einem photokatalytischen Mittel, einem photolumineszenten Mittel oder einer beliebigen Kombination davon ausgewählt ist.

14. Verwendung der multifunktionellen dünnen bituminösen Schicht nach einem der Ansprüche 1-13 als eine Schicht mit hoher mechanischer Leistung in einem Infrastrukturelement, vorzugsweise in Straßenoberflächenbehandlungen, oder als eine Zwischenschicht, die innerhalb von Straßenbelägen platziert wird.

15. Infrastrukturelement, umfassend die multifunktionelle dünne bituminöse Schicht nach einem der Ansprüche 1-13, wobei das Infrastrukturelement vorzugsweise eine Straße, ein Parkbereich, ein Containerdepotbereich, eine Brückenfahrbahn, ein Viadukt, ein Flughafenrollfeld, vorzugsweise eine Landebahn, eine Rollbahn, ein Vorfeld oder eine Flughafenkreuzung, ein Hubschrauberlandeplatz, Straßenbahn- oder Eisenbahnschienen, ein Fahrradweg, eine Straßenkreuzung, ein Hafenkai oder eine Hafenabfertigungswerft ist.

16. Prozess zum Produzieren einer multifunktionellen dünnen bituminösen Schicht nach einem der Ansprüche 1-13 und ihrer Aufbringung auf ein Infrastrukturelement, wobei der Prozess die folgenden Schritte umfasst:
- Bereitstellen einer Additivzusammensetzung, die mindestens ein Polyolefin-Kunststoffmaterial und Graphen umfasst;
- gegebenenfalls Mischen der Additivzusammensetzung mit Bitumen;
- Hinzufügen der Additivzusammensetzung und des Bitumens, die gegebenenfalls vorangehend miteinander vermischt wurden, zu inerten anorganischen Materialien unter Rühren und bei einer Temperatur zwischen 130 °C und 200 °C, wodurch ein bituminöses Gemisch erhalten wird;
- Aufbringen des bituminösen Gemisches, das hierdurch erhalten wird, auf ein Infrastrukturelement bei einer Temperatur zwischen 110 °C und 200 °C, wodurch eine multifunktionelle dünne bituminöse Schicht erhalten wird, wobei die multifunktionelle dünne bituminöse Schicht eine Dicke von gleich oder weniger als 5 cm aufweist; und
- gegebenenfalls Verdichten der multifunktionellen dünnen bituminösen Schicht, vorzugsweise bei einer Temperatur zwischen 110 °C und 200 °C, wobei die multifunktionelle dünne bituminöse Schicht hierdurch auf das Infrastrukturelement aufgebracht wird.

17. Prozess nach Anspruch 16, wobei der Schritt des Hinzufügens einer Additivzusammensetzung und eines Bitumens zu anorganischen inerten Materialien bei einer Temperatur zwischen 165 °C und 185 °C, vorzugsweise zwischen 170 °C und 180 °C, ausgeführt wird und/oder
wobei bei dem Schritt des Aufbringens des bituminösen Gemisches auf ein Infrastrukturelement das bituminöse Gemisch eine Temperatur zwischen 130 °C und 200 °C, vorzugsweise zwischen 150 °C und 180 °C, aufweist.

## Revendications

1. Couche bitumineuse mince multifonctionnelle, destinée à être utilisée comme couche avec de hautes performances mécaniques dans un élément d'infrastructure, à base d'un mélange bitumineux comprenant du bitume, une composition d'additif, et des matériaux inertes inorganiques, ladite composition d'additif comprenant au moins un matériau plastique polyoléfinique et du graphène,
dans laquelle ladite couche bitumineuse mince multifonctionnelle a une épaisseur égale ou inférieure à 5 cm,
lesdits matériaux inertes inorganiques comprenant des granulats, éventuellement en combinaison avec au moins une charge,
dans laquelle lesdits granulats comprend des granulats fins, lesdits granulats fins ayant une taille de particule inférieure ou égale à 2 mm et supérieure à 0,063 mm, telle que mesurée selon la méthode standard UNI EN 12697-2, et
dans laquelle lesdits granulats comprend des granulats grossiers, lesdits granulats grossiers ayant une taille de particule inférieure ou égale à 8 mm et supérieure à 2 mm, telle que mesurée selon la méthode standard UNI EN 12697-2 ;
lesdits matériaux inertes inorganiques ayant une distribution granulométrique dans laquelle 100 % des particules ont une taille de particule inférieure ou égale à 8 mm, telle que mesurée selon la méthode standard UNI EN 12697-2.

2. Couche bitumineuse mince multifonctionnelle selon la revendication 1, ayant une épaisseur comprise entre 0,5 cm et 2 cm, de préférence entre 0,8 cm et 1,5 cm.

3. Couche mince bitumineuse multifonctionnelle selon la revendication 1 ou 2, dans laquelle ledit matériau plastique polyoléfinique est choisi parmi le polyéthylène, le polypropylène ou tout mélange de polyéthylène et de polypropylène.

4. Couche mince bitumineuse multifonctionnelle selon l'une quelconque des revendications précédentes, dans laquelle ledit graphène est choisi parmi les nanoplaquettes de graphène, les nanotubes de graphène, les nanoparticules de graphène, les films de graphène, les aérogels de graphène, les feuilles de graphène, l'oxyde de graphène ou le graphène fonctionnalisé.

5. Couche mince bitumineuse multifonctionnelle selon l'une quelconque des revendications précédentes, dans laquelle ladite composition d'additif comprend un composant supplémentaire choisi parmi le butyral de polyvinyle, un composé acrylate, la lignine, un composé soufré, un sel inorganique ou toute combinaison de ceux-ci.

6. Couche mince bitumineuse multifonctionnelle selon l'une quelconque des revendications précédentes, dans laquelle ladite composition d'additif comprend en outre un plastifiant et / ou un promoteur d'adhérence.

7. Couche mince bitumineuse multifonctionnelle selon la revendication 6, dans laquelle ledit promoteur d'adhérence est choisi parmi les tensioactifs cationiques, anioniques ou amphotères et / ou les composés silanes.

8. Couche mince bitumineuse multifonctionnelle selon l'une quelconque des revendications précédentes, dans laquelle le graphène est compris dans la composition d'additif en une quantité entre 0,005 % et 1 %, de préférence entre 0,005 % et 0,15 %, plus préférentiellement entre 0,01 % et 0,1 %, en poids sur la base du poids total de la composition d'additif.

9. Couche mince bitumineuse multifonctionnelle selon l'une quelconque des revendications 5 à 8, dans laquelle ledit matériau plastique polyoléfinique est compris dans la composition d'additif en une quantité entre 45 % et 99,995 %, de préférence entre 50 % et 99,995 %, en poids sur la base du poids total de la composition d'additif.

10. Couche mince bitumineuse multifonctionnelle selon l'une quelconque des revendications précédentes, dans laquelle ladite composition d'additif est comprise dans ledit mélange bitumineux en une quantité entre 0,05 % et 15 %, de préférence entre 4 % et 8 %, en poids sur la base du poids total de bitume.

11. Couche mince bitumineuse multifonctionnelle selon la revendication 1, dans laquelle dans ledit mélange bitumineux lesdits matériaux inertes inorganiques comprennent des granulats grossiers, lesdits granulats grossiers étant présents dans ledit mélange bitumineux en une quantité entre 5 % et 90 %, de préférence entre 5 % et 30 %, en poids sur la base du poids total du mélange bitumineux, des granulats fins, lesdits granulats fins étant présents dans ledit mélange bitumineux en une quantité entre 5 % et 95 %, de préférence entre 10 % et 85 %, en poids sur la base du poids total du mélange bitumineux, et au moins une charge, ladite au moins une charge étant présente dans ledit mélange bitumineux en une quantité entre 0 % et 20 %, de préférence entre 1 % et 15 %, en poids sur la base du poids total du mélange bitumineux.

12. Couche mince bitumineuse multifonctionnelle selon l'une quelconque des revendications précédentes, dans laquelle ledit mélange bitumineux comprend une quantité de bitume entre 3 % et 10 %, de préférence entre 6,5 % et 8,5 %, en poids sur la base du poids total du mélange bitumineux.

13. Couche mince bitumineuse multifonctionnelle selon l'une quelconque des revendications précédentes, dans laquelle ledit mélange bitumineux comprend un additif supplémentaire, ledit additif supplémentaire étant choisi parmi un additif antigivre, un additif ayant des propriétés insonorisantes, un agent colorant, un agent photocatalytique, un agent photoluminescent ou toute combinaison de ceux-ci.

14. Utilisation de la couche bitumineuse mince multifonctionnelle selon l'une quelconque des revendications 1 à 13 comme couche avec de hautes performances mécaniques dans un élément d'infrastructure, de préférence dans des traitements de surface de route ou comme couche intermédiaire placée à l'intérieur de chaussées de route.

15. Élément d'infrastructure comprenant la couche bitumineuse mince multifonctionnelle selon l'une quelconque des revendications 1 à 13, de préférence ledit élément d'infrastructure étant une route, une zone de stationnement, une zone de parc à conteneurs, un tablier de pont, un viaduc, une piste d'aéroport, de préférence une bande d'atterrissage, une voie de circulation, une aire de trafic ou une jonction d'aéroport, un héliport, une voie de tramway ou de chemin de fer, une piste cyclable, une intersection de route, un quai de port ou un parc de manutention de port.

16. Procédé de production d'une couche bitumineuse mince multifonctionnelle selon l'une quelconque des revendications 1 à 13 et son application à un élément d'infrastructure, ledit procédé comprenant les étapes suivantes :
- la fourniture d'une composition d'additif comprenant au moins un matériau plastique polyoléfinique et du graphène ;
- éventuellement, le mélange de ladite composition d'additif avec du bitume ;
- l'ajout à des matériaux inorganiques inertes, sous agitation et à une température entre 130 °C et 200 °C, de ladite composition d'additif et de bitume, éventuellement préalablement mélangés ensemble, obtenant un mélange bitumineux ;
- l'application du mélange bitumineux ainsi obtenu sur un élément d'infrastructure à une température entre 110 °C et 200 °C, obtenant une couche bitumineuse mince multifonctionnelle, dans lequel ladite couche bitumineuse mince multifonctionnelle a une épaisseur égale ou inférieure à 5 cm ; et,
- éventuellement, le compactage, de préférence à une température entre 110 °C et 200 °C, de ladite couche bitumineuse mince multifonctionnelle ainsi appliquée sur ledit élément d'infrastructure.

17. Procédé selon la revendication 16, dans lequel l'étape d'ajout à des matériaux inertes inorganiques d'une composition d'additif et de bitume est réalisée à une température entre 165 °C et 185 °C, de préférence entre 170 °C et 180 °C, et/ou dans lequel, dans l'étape d'application du mélange bitumineux sur un élément d'infrastructure, ledit mélange bitumineux a une température entre 130 °C et 200 °C, de préférence entre 150 °C et 180 °C.
